# EUROPÄISCHE PATENTSCHRIFT

(11) **EP 4 165 394 B1**
(45) Veröffentlichungstag und Bekanntmachung des Hinweises auf die Patenterteilung: **01.11.2023**
(21) Anmeldenummer: 21731477.2
(22) Anmeldetag: 09.06.2021
(51) Int. Cl.: G01N 21/25, G01N 21/55, G01N 21/84, G01N 21/31, G01N 21/958, G01M 11/02

(54) **MESSVORRICHTUNG UND VERFAHREN ZUM MESSEN EINER REFLEKTIVITÄT VON BESCHICHTETEN OPTISCHEN ELEMENTEN**
MEASURING DEVICE AND METHOD FOR MEASURING A REFLECTIVITY OF COATED OPTICAL ELEMENTS
DISPOSITIF DE MESURE ET PROCÉDÉ POUR LA MESURE D'UNE RÉFLECTIVITÉ D'ÉLÉMENTS OPTIQUES REVÊTUS

(30) Priorität: 11.06.2020 DE 102020115544
(43) Veröffentlichungstag der Anmeldung: 19.04.2023
(73) Patentinhaber: Trioptics GmbH, 22880 Wedel (DE)
(72) Erfinder: WERSCHNIK, Jan, 07745 Jena (DE); FRANZ, Stefan, 07751 Jena (DE)
(74) Vertreter: Waldauf, Alexander
(86) Internationale Anmeldenummer: PCT/EP2021/065406
(87) Internationale Veröffentlichungsnummer: WO 2021/250068

(56) Entgegenhaltungen:
- WO-A1-2016/171397
- DE-A1-102008 016 714
- JP-A- 2017 198 491
- US-A- 5 365 340
- US-A1- 2003 071 994
- US-A1- 2007 229 844
- US-A1- 2014 285 657

## Beschreibung

Der vorliegende Ansatz bezieht sich auf eine Messvorrichtung und ein Verfahren zum Messen einer Reflektivität von optischen Elementen wie einer Linse oder einer Planplatte, welche z. B. in Objektiven für Lichtquellenstrahlführungen oder als Schutzglas in einem Strahlengang eingesetzt werden sollen.

Die EP 1 785 692 A2 beschreibt ein Verfahren und eine Vorrichtung zum Messen von Schichtdicken und Schichthomogenitäten in transparenten, innenseitig gleitmittel- und hydrophobierungsbeschichteten Behältern, insbesondere pharmazeutischen Behältnissen. Die DE 11 2010 001 378 T5 offenbart ein Filmdickenmessgerät und Messverfahren.

US 5,365,340 offenbart eine Messvorrichtung zum Messen einer Reflektivität eines beschichteten optischen Elements umfassend eine Lichtbereitstellungseinrichtung mit zumindest einer Lichtquelle, die zum Bereitstellen zumindest zweier Lichtstrahlen mit je einer unterschiedlichen definierten Wellenlänge ausgebildet ist, zumindest einen Bildsensor um zumindest eine Intensität der von dem optischen Element reflektierten Lichtstrahlen zu sensieren und eine Auswerteeinrichtung.

### Offenbarung der Erfindung

Vor diesem Hintergrund werden mit dem vorliegenden Ansatz eine Messvorrichtung zum Messen einer Reflektivität eines beschichteten optischen Elements für ein Objektiv für eine Lichtquelle sowie ein Verfahren zum Messen einer Reflektivität eines beschichteten optischen Elements für ein Objektiv für eine Lichtquelle gemäß den Hauptansprüchen vorgestellt. Vorteilhafte Ausgestaltungen ergeben sich aus den jeweiligen Unteransprüchen und der nachfolgenden Beschreibung.

Die mit dem vorgestellten Ansatz erreichbaren Vorteile bestehen darin, dass identisch aussehende jedoch unterschiedlich beschichtete optische Elemente unterschieden werden können. So können Verwechslungen beim Bau eines Objektivs mit beispielsweise mehreren optischen Elementen vermieden werden.

Eine Messvorrichtung zum Messen einer Reflektivität eines beschichteten optischen Elements für ein Objektiv für eine Lichtquelle weist eine Lichtbereitstellungseinrichtung, zumindest ein Messvorrichtungsobjektiv und zumindest einen Bildsensor auf. Die Lichtbereitstellungseinrichtung weist zumindest eine Lichtquelle auf, die zum Bereitstellen zumindest zweier Lichtstrahlen mit je einer definierten Wellenlänge ausgebildet ist. Das Messvorrichtungsobjektiv ist dazu ausgeformt, um die Lichtstrahlen auf das beschichtete optische Element zu fokussieren. Der Bildsensor ist angeordnet und ausgeformt, um zumindest eine Intensität der von dem optischen Element reflektierten Lichtstrahlen zu sensieren, um ansprechend auf die sensierte Intensität der von dem optischen Element reflektierten Lichtstrahlen die Reflektivität zu messen.

Bei dem Bildsensor kann es sich um eine Kamera handeln. Unter einer Lichtquelle kann vorliegend eine Laserlichtquelle verstanden werden. Unter einem optischen Element kann vorliegend beispielsweise eine Linse, ein Prisma oder dergleichen verstanden werden. Eine solche Messvorrichtung kann vorteilhafterweise dazu dienen, um eine beispielsweise erwartete Reflektivität zu prüfen. Da die Beschichtung des optischen Elements für die im Gebrauch für sie vorgesehene Wellenlänge eine bestimmte, meist niedrige Reflexivität aufweist, für andere Wellenlängen aber eine meist höhere, kann anhand der Intensität der reflektierten Lichtstrahlen sehr schnell und einfach erkannt werden, ob für welche Wellenlänge die Linse beschichtet ist. Unter Verwendung einer solchen Messvorrichtung kann somit mit nur sehr wenigen und günstigen Bauteilen verlässlich geprüft werden, um welches optische Element für welche Wellenlänge es sich handelt.

Die Messvorrichtung weist eine Auswerteeinrichtung auf, die dazu ausgebildet ist, um ein positives Messergebnis zu ermitteln, wenn die Intensität zumindest eines reflektierten Lichtstrahls einen Schwellenwert nicht übersteigt und/oder ein negatives Messergebnis zu ermitteln, wenn die Intensität zumindest eines reflektierten Lichtstrahls einen Schwellenwert übersteigt, und/oder ein positives Messergebnis zu ermitteln, wenn die Intensität zumindest eines reflektierten Lichtstrahls kleiner ist, als eine weitere Intensität eines von der Lichtbereitstellungseinrichtung bereitgestellten weiteren Lichtstrahls mit einer weiteren definierten Wellenlänge, welcher von dem optischen Element reflektiert wurde. Wenn die Intensität den Schwellenwert von beispielsweise innerhalb eines Toleranzbereichs von bis zu 20 Prozent Abweichung 0,5 Prozent der Intensität des von der Lichtbereitstellungseinrichtung bereitgestellten Lichtstrahls nicht übersteigt, kann ein derart kleines Intensitätssignal eine erwartete Reflektivität von 0,5 Prozent repräsentieren. Die Beschichtung des optischen Elements ist dann für 99,5 Prozent der Intensität durchlässig und somit für die definierte Wellenlänge geeignet. Wenn die Intensität den Schwellenwert von beispielsweise 0,5 Prozent der Intensität des von der Lichtbereitstellungseinrichtung bereitgestellten Lichtstrahls jedoch überschreitet, kann ein starkes Intensitätssignal erkannt werden, welches der erwarteten Reflektivität von 0,5 Prozent nicht entspricht. In einem solchen Fall kann darauf geschlossen werden, dass die Beschichtung des optischen Elements nur sehr wenig der Intensität durchlässt und somit für die definierte Wellenlänge nicht geeignet ist.

Gemäß einer Ausführungsform kann die Messvorrichtung einen zwischen der Lichtquelle und dem Messvorrichtungsobjektiv angeordneten Strahlteiler aufweisen, der dazu ausgebildet ist, um zumindest einen der reflektierten Lichtstrahlen zu dem Bildsensor umzulenken, insbesondere im Wesentlichen in einem rechten Winkel umzulenken. So kann ein Beleuchtungsstrahlengang vom Beobachtungsstrahlengang getrennt werden.

Es ist weiterhin von Vorteil, wenn die Messvorrichtung eine Blende aufweist, die zwischen der Lichtquelle und dem Messvorrichtungsobjektiv angeordnet ist, wobei eine erste Apertur der Blende kleiner ist, als eine zweite Apertur des Messvorrichtungsobjektivs. So kann verhindert werden, dass bei einer Dezentrierung oder Kippung des optischen Elements ein Teil des Lichtstrahls nicht zum Bildsensor gelangt, weil er nicht direkt in sich zurückläuft, sondern eine größere Apertur beansprucht.

Die Messvorrichtung kann auch die Blende oder eine zusätzliche Blende aufweisen, die zwischen der Lichtquelle und dem Messvorrichtungsobjektiv angeordnet ist, wobei eine erste Apertur der Blende und eine zweite Apertur des Messvorrichtungsobjektivs auf einer Symmetrieachse oder auf unterschiedlichen Symmetrieachsen liegen. Eine Orientierung auf einer Symmetrieachse kann einen schlanken Aufbau ermöglichen. Eine Orientierung auf unterschiedlichen Symmetrieachsen kann vorteilhaft sein, wenn die Symmetrieachse des Mess- oder Prüflings-Systems nicht zugänglich ist.

Die Messvorrichtung kann auch ein weiteres Messvorrichtungsobjektiv aufweisen, das zwischen dem Bildsensor und einer Aufnahmeposition zur Aufnahme des optischen Elements angeordnet ist, wobei das weitere Messvorrichtungsobjektiv ausgeformt ist, um den reflektierten Lichtstrahl zu dem Bildsensor zu fokussieren. So können zwei Messvorrichtungsobjektive mit kleineren Aperturen verwendet werden, anstelle eines einzelnen Objektivs mit einer sehr großen Apertur, um den Beleuchtungsstrahlengang vom Beobachtungsstrahlengang vollständig zu trennen. Das weitere Messvorrichtungsobjektiv kann vorteilhafterweise eine größere Apertur aufweisen, als das Messvorrichtungsobjektiv, um auch einen sehr stark auf das optische Element abgelenkten Lichtstrahl einfangen zu können.

Es ist weiterhin von Vorteil, wenn die Lichtbereitstellungseinrichtung zumindest einen Filter aufweist, der dazu ausgebildet ist, um die definierte Wellenlänge des Lichtstrahls zu einer veränderten definierten Wellenlänge zu verändern, und/oder zumindest eine weitere Lichtquelle aufweist, die zum Bereitstellen eines weiteren Lichtstrahls mit einer sich von der definierten Wellenlänge unterscheidenden weiteren definierten Wellenlänge ausgebildet ist, wobei das Messvorrichtungsobjektiv dazu ausgeformt ist, um den weiteren Lichtstrahl auf das beschichtete optische Element zu fokussieren, und der Bildsensor angeordnet ist, um zumindest eine weitere Intensität und/oder weitere Reflexionswellenlänge des von dem optischen Element reflektierten weiteren Lichtstrahls zu sensieren, um die Reflektivität zu messen. So kann nach beispielsweise einem negativen Messergebnis der Prüfvorgang mit einer anderen Wellenlänge wiederholt werden. Um die Lichtstrahlen mit den sich unterscheidenden Wellenlängen bereitstellen zu können, kann die Lichtbereitstellungseinrichtung beispielsweise zumindest eine LED, eine Laser-Lichtquelle und/oder eine Spektrallampe aufweisen.

Die Lichtquelle kann auch zumindest eine Lichtleitfaser aufweisen. So kann Bauraum effizient ausgenutzt werden, da die Lichtquelle über die Lichtleitfaser flexibel positionierbar ist.

Es ist weiterhin von Vorteil, wenn die Messvorrichtung zumindest ein Wellenlängen-selektives Element aufweist, das an dem Bildsensor oder im Bereich des Bildsensors angeordnet ist, und dazu ausgebildet ist, um einen definierten Wellenlängenbereich zu selektieren. Das Wellenlängen-selektive Element kann beispielsweise ein Farbmatrixfilter sein, der auf relevante Wellenlängen eingestellt ist. Möglich ist auch eine spektrale Aufspaltung z. B. durch ein Gitter und die Verwendung mehrere Fotodioden. So kann beispielsweise als der Lichtstrahl weißes Licht bereitgestellt werden und der definierte Wellenlängenbereich selektiert werden, um so die Reflexionswellenlänge zu erkennen.

Es ist weiterhin von Vorteil, wenn die Messvorrichtung zumindest einen weiteren Bildsensor aufweist, der angeordnet ist, um die Intensität und/oder Reflexionswellenlänge des von dem optischen Element reflektierten Lichtstrahls zu sensieren, und/oder zumindest ein weiteres Wellenlängen-selektives Element aufweist, das an dem weiteren Bildsensor oder im Bereich des weiteren Bildsensors angeordnet ist, und dazu ausgebildet ist, um einen weiteren definierten Wellenlängenbereich zu selektieren, der sich von dem Wellenlängenbereich unterscheidet. So kann eine parallele unterschiedliche beispielsweise spektrale Aufspaltung unter Verwendung von mehreren Empfängern stattfinden.

Die Lichtquelle kann ausgebildet sein, um den Lichtstrahl mit der definierten Wellenlänge von 355nm, 532nm, 635nm, 980nm und/oder 1064nm innerhalb eines Toleranzbereichs (beispielsweise von bis zu 10% Abweichung) bereitzustellen. So können optische Elemente für gängige Beamexpander, auch "Strahlaufweiter" genannt, und/oder für F-Theta-Objektive, auch "Scanobjektive" oder "Flachfeldobjektive" genannt, geprüft werden.

Es gibt weitere Einsatzgebiete von Optiken, bei denen es wahrscheinlich ist, dass mechanisch gleiche oder sehr ähnliche Optiken und identische Mechaniken eingebaut werden, aber unterschiedliche Beschichtungen aufweisen. Das könnte z.B. bei Spektralsensorik so sein (siehe "Multispektralkamera MKF6" - 6 identische Kameras nebeneinander für unterschiedliche Farbkanäle). Eine Anwendung "im Feld" kann es sein, zu prüfen, ob ein Schutzglas das für die jeweilige Anlage richtige ist. Wenn man den Strahlengang entsprechend klein aufbaut, kann man so ein Hand-Messmittel bereitstellen.

Ein Verfahren zum Messen einer Reflektivität eines beschichteten optischen Elements für ein Objektiv für eine Lichtquelle unter Verwendung einer der vorangehend beschriebenen Messvorrichtungen weist einen Schritt des Bereitstellens, einen Schritt des Sensierens und einen Schritt des Ermittelns auf. Im Schritt des Bereitstellens werden zumindest zwei Lichtstrahlen mit je einer unterschiedlichen definierten Wellenlänge auf das Messvorrichtungsobjektiv bereitgestellt, das dazu ausgeformt ist, um die Lichtstrahlen auf das beschichtete optische Element zu fokussieren. Im Schritt des Sensierens wird zumindest die Intensität der von dem optischen Element reflektierten Lichtstrahlen sensiert, um die Reflektivität zu messen. Im Schritt des Ermittelns wird ein positives Messergebnis ermittelt, wenn die Intensität zumindest eines reflektierten Lichtstrahls einen Schwellenwert nicht übersteigt und/oder ein negatives Messergebnis ermittelt, wenn die Intensität zumindest eines reflektierten Lichtstrahls einen Schwellenwert übersteigt, und/oder ein positives Messergebnis ermittelt, wenn die Intensität zumindest eines reflektierten Lichtstrahls kleiner ist, als eine weitere Intensität eines von der Lichtbereitstellungseinrichtung bereitgestellten weiteren Lichtstrahls mit einer weiteren definierten Wellenlänge, welcher von dem optischen Element reflektiert wurde.

Der Ansatz wird nachstehend anhand der beigefügten Zeichnungen beispielhaft näher erläutert. Es zeigen:
Fig. 1 eine schematische Darstellung einer Messvorrichtung zum Messen einer Reflektivität eines beschichteten optischen Elements für ein Objektiv für eine Lichtquelle gemäß einem Ausführungsbeispiel;
Fig. 2 bis 4 je eine schematische Darstellung einer Messvorrichtung gemäß einem Ausführungsbeispiel; und
Fig. 5 ein Ablaufdiagramm eines Verfahrens zum Messen einer Reflektivität eines beschichteten optischen Elements für ein Objektiv für eine Lichtquelle gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

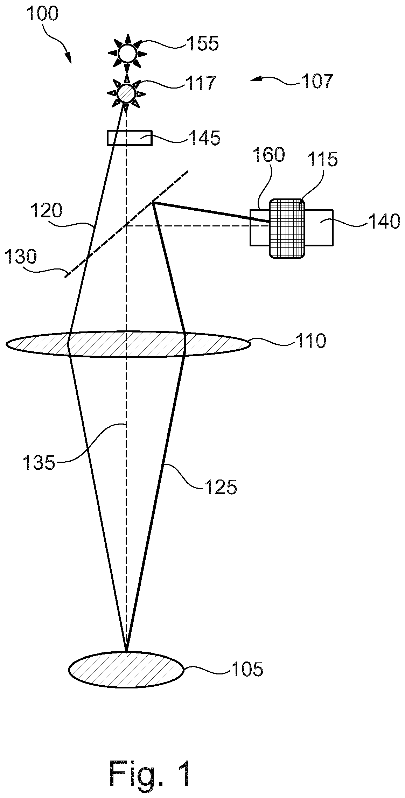

Fig. 1 zeigt eine schematische Darstellung einer Messvorrichtung 100 zum Messen einer Reflektivität eines beschichteten optischen Elements 105 für ein Objektiv für eine Lichtquelle gemäß einem Ausführungsbeispiel.

Gemäß diesem Ausführungsbeispiel ist das optische Element 105 in oder an der Messvorrichtung 100 aufgenommen, um die Reflektivität deren Beschichtung zu messen. Bei dem optischen Element 105 handelt es sich gemäß diesem Ausführungsbeispiel lediglich beispielhaft um eine Linse 105, die für ein Objektiv für eine Lichtquelle ausgeformt ist, der für eine Lichtquellenmaterialbearbeitung beispielsweise mittels Laser geeignet ist. Das optische Element 105 ist gemäß diesem Ausführungsbeispiel zur Verwendung in einem Beamexpander und/oder einem F-Theta-Objektive einsetzbar.

Die Messvorrichtung 100 weist eine Lichtbereitstellungseinrichtung 107, zumindest ein Messvorrichtungsobjektiv 110 und zumindest einen Bildsensor 115 auf. Die Lichtbereitstellungseinrichtung 107 weist zumindest eine Lichtquelle 117 auf, die zum Bereitstellen zumindest eines Lichtstrahls 120 mit einer definierten Wellenlänge ausgebildet ist, auf. Die Lichtquelle 117 ist ausgebildet, um zumindest zwei Lichtstrahlen 120 auszusenden, die je eine unterschiedliche definierte Wellenlänge aufweisen. Das Messvorrichtungsobjektiv 110 ist dazu ausgeformt, um den Lichtstrahl 120 bzw. die Lichtstrahlen 120 auf das beschichtete optische Element 105 zu fokussieren. Der Bildsensor 115 ist angeordnet, um zumindest eine Intensität und/oder Reflexionswellenlänge des von dem optischen Element 105 reflektierten Lichtstrahls 125 zu sensieren, um ansprechend auf die sensierte Intensität und/oder Reflexionswellenlänge der von dem optischen Element reflektierten Lichtstrahlen die Reflektivität zu messen.

Eine hier gezeigte Linie des Lichtstrahls 120 markiert einen Randstrahl des Lichtstrahls 120 auf einem Hinweg zu dem optischen Element 105, wobei eine Linie des reflektierten Lichtstrahls 125 einen gegenüberliegenden Randstrahl des reflektierten Lichtstrahls 125 auf einem Rückweg von dem optischen Element 105 markiert.

Gemäß diesem Ausführungsbeispiel weist die Messvorrichtung 100 lediglich beispielhaft einen zwischen der Lichtquelle 117 und dem Messvorrichtungsobjektiv 110 angeordneten Strahlteiler 130 auf, der dazu ausgebildet ist, um den reflektierten Lichtstrahl 125 zu dem Bildsensor 115 umzulenken. Gemäß diesem Ausführungsbeispiel ist der Strahlteiler 130 ausgeformt, um den reflektierten Lichtstrahl 125 im Wesentlichen in einem rechten Winkel umzulenken. Gemäß diesem Ausführungsbeispiel ist der Strahlteiler 130 auf einer dem Messvorrichtungsobjektiv 110 zugewandten Seite reflektierend ausgeformt und auf einer der Seite gegenüberliegenden Seite, welche gemäß diesem Ausführungsbeispiel der Lichtquelle 117 zugewandt angeordnet ist, durchlässig ausgeformt. Die Lichtquelle 117, das Messvorrichtungsobjektiv 110, das optische Element 105 und/oder der Strahlteiler 130 sind gemäß diesem Ausführungsbeispiel fluchtend und/oder koaxial auf einer gemeinsamen Achse 135 angeordnet. Die reflektierende Seite des Strahlteilers 130 ist gemäß diesem Ausführungsbeispiel um 45° von dem optischen Element 105 zu dem Bildsensor 115 hingeneigt angeordnet.

Gemäß diesem Ausführungsbeispiel weist die Messvorrichtung 100 lediglich optional eine Auswerteeinrichtung 140, zumindest einen Filter 145, zumindest eine weitere Lichtquelle 155, zumindest ein Wellenlängen-selektives Element 160 und/oder einen weiteren Bildsensor 115 auf.

Die Auswerteeinrichtung 140 ist dazu ausgebildet, um ein positives Messergebnis zu ermitteln, wenn die Intensität zumindest eines reflektierten Lichtstrahls 120 einen Schwellenwert nicht übersteigt und/oder ein negatives Messergebnis zu ermitteln, wenn die Intensität zumindest eines reflektierten Lichtstrahls 120 einen Schwellenwert übersteigt, und/oder ein positives Messergebnis zu ermitteln, wenn die Intensität zumindest eines reflektierten Lichtstrahls kleiner ist als eine weitere Intensität eines von der Lichtbereitstellungseinrichtung 107, beispielsweise von der weiteren Lichtquelle 155, bereitgestellten weiteren Lichtstrahls mit einer sich von der definierten Wellenlänge unterscheidenden weiteren definierten Wellenlänge, wobei der weitere Lichtstrahl von dem optischen Element 105 reflektiert wurde. Der Schwellenwert ist gemäß diesem Ausführungsbeispiel als ein Intensitätswert von 0,5 Prozent der Intensität des von der Lichtbereitstellungseinrichtung 107 bereitgestellten Lichtstrahls 120 innerhalb eines Toleranzbereichs von bis zu 20 Prozent Abweichung in der Auswerteeinrichtung 140 hinterlegt oder von der Auswerteeinrichtung 140 einlesbar. Gemäß einem alternativen Ausführungsbeispiel weist der Schwellenwert einen beliebigen anderen Intensitätswert auf.

Der Filter 145 ist dazu ausgebildet, um die definierte Wellenlänge des Lichtstrahls 120 zu einer veränderten definierten Wellenlänge zu verändern. Die weitere Lichtquelle 155 ist zum Bereitstellen eines weiteren Lichtstrahls mit einer sich von der definierten Wellenlänge unterscheidenden weiteren definierten Wellenlänge ausgebildet, wobei das Messvorrichtungsobjektiv 110 dazu ausgeformt ist, um den weiteren Lichtstrahl auf das beschichtete optische Element 105 zu fokussieren, und der Bildsensor 115 oder der weitere Bildsensor 115 angeordnet ist, um zumindest eine weitere Intensität und/oder weitere Reflexionswellenlänge des von dem optischen Element 105 reflektierten weiteren Lichtstrahls zu sensieren, um die Reflektivität zu messen. Die Lichtbereitstellungseinrichtung 107 weist gemäß einem Ausführungsbeispiel als die Lichtquelle/n 117, 155 zumindest eine LED, eine Lichtquelle (beispielsweise eine Laser-Lichtquelle) und/oder eine Spektrallampe auf. Die Lichtquelle 117 und/oder weitere Lichtquelle 155 weist gemäß einem Ausführungsbeispiel zumindest eine Lichtleitfaser auf.

Das Wellenlängen-selektive Element 160 ist gemäß diesem Ausführungsbeispiel an dem Bildsensor 115 oder im Bereich des Bildsensors 115 angeordnet, hier zwischen dem Bildsensors 115 und dem Strahlteiler 130, und dazu ausgebildet, um einen definierten Wellenlängenbereich zu selektieren. Das Wellenlängen-selektive Element 160 ist gemäß unterschiedlichen Ausführungsbeispielen beispielsweise als ein Farbmatrixfilter ausgeformt, der auf relevante Wellenlängen eingestellt ist, und/oder ein Gitter und/oder mehrere Fotodioden für eine spektrale Aufspaltung ausgebildet.

Der weitere Bildsensor 115 ist gemäß diesem Ausführungsbeispiel angeordnet, um die Intensität und/oder Reflexionswellenlänge des von dem optischen Element 105 reflektierten Lichtstrahls 120 zu sensieren. Gemäß einem Ausführungsbeispiel weist der weitere Bildsensor 115 zumindest ein weiteres Wellenlängen-selektives Element auf, das an dem weiteren Bildsensor 115 oder im Bereich des weiteren Bildsensors 115 angeordnet ist und dazu ausgebildet ist, um einen weiteren definierten Wellenlängenbereich zu selektieren, der dich von dem Wellenlängenbereich unterscheidet.

Die Lichtquelle 117 ist gemäß unterschiedlichen Ausführungsbeispielen ausgebildet, um den Lichtstrahl 120 mit der definierten Wellenlänge von 355nm, 532nm, 635nm, 980nm und/oder 1064nm innerhalb eines Toleranzbereichs von bis zu 10% Abweichung bereitzustellen.

Die hier vorgestellte Messvorrichtung 100 ermöglicht vorteilhafterweise eine Beschichtungs-Testanordnung und einen Prozess zur Qualitätssicherung.

Bei der Fertigung von Kleinserien von Objektiven mit sehr ähnlichen geometrischen Eigenschaften aber für unterschiedliche Wellenlängenbereiche kommen relevant häufig Logistik-Fehler vor. Gleich aussehende, teilweise auch identische optische Elemente 105 werden mit unterschiedlichen Beschichtungen gefertigt und in identische Gehäuse verbaut. Dabei kommt es manchmal zu Verwechslungen, die zu hohen Folgeaufwänden führen. Mit der hier vorgestellten Messvorrichtung 100 entsteht ein einfaches Testgerät, mit dem die Beschichtung jedes optischen Elements 105 vor dem Einbau typisiert werden kann und so Fehlerkosten verringert werden können.

Die Messvorrichtung 100 realisiert eine optische Anordnung zur Bestimmung der Reflektivität bzw. Transmission von optischen Elementen, wobei zwei, drei oder mehr Wellenlängen verwendet werden, die auf die Nennwellenlängen von optischen Elementen 105 ähnlicher Geometrie abgestimmt sind, die in einer Fertigungsstätte anfallen können, hier z. B. 1064 / 532 / 355 nm, oder 1064 / 980 nm. Die Messvorrichtung 100 ist in der Optikfertigung beim Einbau von optischen Elementen 105 in Objektive anwendbar. Unter Verwendung der Messvorrichtung 100 können die optischen Elemente 105 der Beamexpander, auch "Strahlaufweiter" genannt, vor dem Einbau geprüft werden, sodass ähnliche Elemente, die für nicht korrekte Wellenlänge beschichtet sind, einfach erkannt werden. Hierbei können insbesondere die optischen Elemente 105 in der Beamexpanderfertigung und in der F-Theta-Fertigung diskrimiert werden.

Die Messvorrichtung 100 in Form eines Prüfmittels besteht aus einfachen Elementen, sodass sie günstiger als marktübliche Transmissionsmessgeräte bereitgestellt werden kann. Mit einer Prüfzeit von wenigen Sekunden sind ferner die Einsatzkosten niedrig. Die Prüfung des optischen Elements 105 erfolgt gemäß einem Ausführungsbeispiel an der Stelle im Prozess, an der die wichtigsten Fehler, die zur Verwechslung führen, alle aufgetreten sind und die Korrektur des Fehler, beispielsweise eine Wiederzerlegung des Objektivs und mehr, mit den geringsten Zusatzaufwänden verbunden ist, es kann dann beispielsweise ein anderes optisches Element verwende werden. Ein Prüfergebnis, beispielsweise das positive oder negative Messergebnis, klassifiziert die optischen Elemente 105 deutlich, sodass Verwechslungen und die damit einhergehenden Folgekosten entfallen. Dank der hier vorgestellten Messvorrichtung 100 ist also eine Prüfung der Schichteigenschaften von optischen Elementen 105 vor dem Einbau ermöglicht. So können Fehlmontagen verhindert werden. Mit zunehmender Variantenbildung an optischen Elementen 105 wird die Fehlerhäufigkeit ohne diese Prüfung überproportional ansteigen.

Es folgt eine Beschreibung einer Schichterkennung eines optischen Elements 105:
Strahlaufweiter (Beamexpander) und Scanobjektive (F-Theta-Objektive) für die Lichtmaterialbearbeitung sind im Betrieb intensiver Lichtstrahlung mit beispielsweise Laser-Licht ausgesetzt. Ein wesentliches Qualitätskriterium ist die Lichtfestigkeit der optischen Elemente 105 und Schichten. Die Schicht des optischen Elements 105, die gemäß einem Ausführungsbeispiel als die Schicht eine Antireflexbeschichtung (AR-Schicht) aufweist, ist gemäß diesem Ausführungsbeispiel so ausgelegt, dass sie eine höchstmögliche Transmission garantiert. Das tut sie aber nur an der jeweiligen Designwellenlänge und in einem kleinen Bereich um diese herum.

Ein Farbeindruck, den dieses/diese optische/n Element/e 105 bei der Betrachtung in Umgebungslicht erzeugen, optimalerweise mit Hellfeld-Auflicht, ist chargenweise auch für eine Nennwellenlänge unterschiedlich, da des Restspektrum stark von nicht gesteuerten Toleranzen abhängt. Eine visuelle Prüfung ist selbst unter optimalen Bedingungen unzuverlässig. Die Beleuchtung im Montageraum ist aber dafür optimiert, Sauberkeitsfehler sichtbar und korrigierbar zu machen, beispielsweise mit Dunkelfeld-Auflicht und Dunkelfeld-Durchlicht. Die Prüfung soll somit durch Hilfsmittel unterstützt werden.

Die Messvorrichtung 100 realisiert ein günstiges Prüfmittel zur Unterscheidung der relevanten Beschichtungen. Zu Gunsten der Einfachheit und niedriger Herstellungskosten wird vorgeschlagen, kein universelles Transmissionsmessgerät zu verwenden, sondern eine Kombination diskreter Einzel-Transmissionstests. Der Verzicht auf die Universalität erlaubt die Verwendung weniger Elemente.

Am Beispiel der zwei Wellenlängen, für die geometrisch identische Beamexpander existieren, gemäß diesem Ausführungsbeispiel 355, 635 / 1064 nm, bzw. für die geometrisch identische kundenspezifische angepasste F-Theta-Objektive mit 1064 / 980 nm existieren, wird im Folgenden gezeigt, wie das möglich ist.

Damit ein von der Messvorrichtung 100 durchführbares Verfahren zuverlässig funktioniert, ist ein inhärent hohes Signal-Rausch-Verhältnis, kurz "SNR", anzustreben.

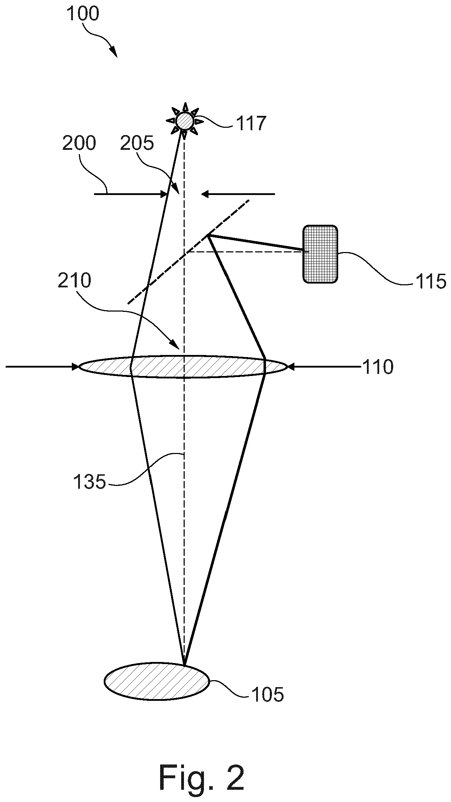

Eine typische AR-Schicht, die 0,5% Restreflektivität auf der Arbeitswellenlänge und 30% Reflektivität auf einer anderen Wellenlänge aufweist, wird ein SNR von 30:0,5 = 60 bei Prüfung in Reflexion und von 99,5:70 = 1,4 in Transmission zeigen. In untypischen Fällen, wenn die Restreflektivität in dem nicht-nominalen Wellenlängenbereich zufällig niedriger ist, ist eine Prüfung in Transmission sehr exakt auszuführen. Gezeigt ist in den Figuren 1 und 2 je eine "On-Axis-Anordnung" der Messvorrichtung 100. Es ist gemäß diesem Ausführungsbeispiel ein sogenannter "Cat-Eye-Strahlengang" (Katzenauge) verwendet, wie er oft für optische Messtechniken auf AKF-Basis Verwendung findet. Die Lichtquelle 117 oder eine mit der Lichtquelle 117 beleuchtete Marke wird direkt auf die Oberfläche eines optischen Bauelements in Form des optischen Elements 105 abgebildet. Das Bild wird dort reflektiert und gelangt auf demselben Weg wieder zurück zum Messvorrichtungsobjektiv 110. Der Strahlteiler 130 trennt den Beleuchtungsstrahlengang vom Beobachtungsstrahlengang. Das Bild der Quelle entsteht auf einem Empfänger in Form des Bildsensors 115/einer Kamera. Die Intensität auf dem Empfänger ist gemäß diesem Ausführungsbeispiel ein Maß für die (Rest-)Reflektivität des Prüflings in Form des optischen Elements 105.

Eine Signal-Kodierung erfolgt gemäß einem Ausführungsbeispiel folgendermaßen:
Zur Unterscheidung der Schichten anhand markanter Reflexionseigenschaften werden gemäß einem Ausführungsbeispiel unterschiedliche Wellenlängen verwendet. Eine Variante, das umzusetzen, besteht gemäß einem Ausführungsbeispiel darin, Lichtquellen 117, 155 mit klar unterschiedlichen Spektren zu verwenden, beispielsweise LED, Laser-Lichtquelle und/oder Spektrallampen o.ä., oder gemäß einem alternativen Ausführungsbeispiel aus zumindest einer breitbandigen Lichtquelle 117, 155 wie einer Bogenlampe, Glühlampe und/oder LED [weiß] Bereiche mit Filtern 145 zu selektieren.

Die Kodierung soll über den Übertragungsweg erhalten bleiben. Das wird gemäß einem Ausführungsbeispiel durch sequenzielles Ansteuern oder durch laterale Trennung der Lichtquellen 117, 155 erreicht.

Eine günstige Bauform einer Lichtquelle 117, 155 besteht gemäß einem Ausführungsbeispiel darin, Lichtleitfasern als Primärquelle im Prüfstrahlengang zu verwenden. Die Endflächen befinden sich gemäß einem Ausführungsbeispiel nah beieinander und sind durch ihre Anordnung identifizierbar. Gleichzeitig ist es so möglich, die Lichtquellen 117, 155, die auch als Strahlungsquellen bezeichnet werden können, an den Fasereinkopplungen leicht zu tauschen, ohne in den Prüfaufbau einzugreifen. Auch ein Austauschen von Filtern 145 an unterschiedlichen Einkoppelstellen ist leicht möglich.

Besteht die Primärquelle im Prüfaufbau gemäß einem Ausführungsbeispiel nur aus genau einem Punkt, beispielsweise einer Blendenöffnung, Faseraustrittsfläche o.ä., ist eine zeitliche Kodierung so gewählt, dass zum Zeitpunkt der Intensitätsmessung auf dem Empfänger bekannt ist, welche Wellenlänge eingeschaltet war. Für eine schnelle bzw. automatisierte Messung weist die Messvorrichtung 100 dazu gemäß einem Ausführungsbeispiel eine Steuerung auf, die die geschaltete Lichtquelle 117, 155 und den Empfänger ausliest. Es ist gemäß einem anderen Ausführungsbeispiel auch möglich, eine weiße, ungeschaltete Lichtquelle 117, 155 zu verwenden. Dazu ist gemäß einem Ausführungsbeispiel vor oder auf dem Empfänger zumindest das eine wellenlängenselektive Element 160 angeordnet. Das kann passieren durch ein Tauschen oder Durchstimmen von weiteren Filtern vor dem Element 160 oder durch eine parallele spektrale Aufspaltung und die Verwendung von mehreren Empfängern in Form von beispielsweise den mehreren Bildsensoren 115. Gemäß einem Ausführungsbeispiel wird eine Kamera mit einem Farbmatrixfilter verwendet, der auf relevante Wellenlängen eingestellt ist. Gemäß einem anderen Ausführungsbeispiel erfolgt eine spektrale Aufspaltung z. B. durch ein Gitter und die Verwendung mehrere Fotodioden.

Eine Signal-Auswertung erfolgt gemäß einem Ausführungsbeispiel folgendermaßen:
Mit der Auswahl der Prüf-Wellenlängen ergibt sich für typische Schichtsysteme mindestens ein kleines Intensitätssignal auf dem Empfänger. Dieses wird bei der Wellenlänge beobachtet, für die die Schicht entspiegelnd wirkt. Auf der oder den anderen Wellenlängen werden stärkere Signale beobachtet werden. Bereits ein einfacher Vergleich der Intensitäten liefert die Wellenlänge, für die die Schicht gemacht ist. Ein solcher Vergleich ist von der Auswerteeinrichtung 140 durchführbar. Eine weitere Verbesserung der Messwert-Bewertung ergibt sich, wenn gemäß einem Ausführungsbeispiel die Messwerte gegen die Intensität der Quelle normiert wurden. Das kann beispielsweise leicht dadurch ausgeführt worden sein, indem eine unbeschichtete Materialprobe oder ein Spiegel angemessen wurde. Liegen die zu unterscheidenden Wellenlängen nahe beieinander, erfolgt gemäß einem Ausführungsbeispiel eine Referenzierung gegen eine bekannte Referenzprobe mit den Eigenschaften der Prüflinge.

### Geschützte Wellenlängenkombinationen:

Für die Aufgabe zur Qualitätssicherung sind folgende Spektralkombinationen relevant und besonders zu erwähnen:
- 1064 nm / 532 nm / 355 nm
- 1064 nm / 980 nm

Fig. 2 zeigt eine schematische Darstellung einer Messvorrichtung 100 gemäß einem Ausführungsbeispiel. Dabei kann es sich um die in Fig. 1 beschriebene Messvorrichtung 100 handeln, die gemäß diesem Ausführungsbeispiel ferner eine Blende 200 aufweist.

Die Blende 200 ist zwischen der Lichtquelle 117 und dem Messvorrichtungsobjektiv 110 angeordnet, wobei eine erste Apertur 205 der Blende 200 kleiner ist, als eine zweite Apertur 210 des Messvorrichtungsobjektivs 110. Die erste Apertur 205 der Blende 200 und die zweite Apertur 210 des Messvorrichtungsobjektivs 110 liegen gemäß diesem Ausführungsbeispiel auf einer Symmetrieachse, hier der Achse 135. Hierbei liegen gemäß diesem Ausführungsbeispiel die Mittelpunkte der Aperturen 205, 210 auf der Achse 135. Das optische Element 105 ist gemäß diesem Ausführungsbeispiel dezentriert oder gekippt angeordnet.

Ein Hauptfehlerbeitrag in der Übertragungsfunktion des Strahlenganges ist die Wirkung von Blenden. Eine Dezentrierung, beispielsweise eine Kippung, des optischen Elements 105 führt im Allgemeinen dazu, dass ein Teil des Beleuchtungslichtes nicht zum Bildsensor 115 gelangt, weil es nicht direkt in sich zurückläuft, sondern eine größere Apertur beansprucht. Die Anordnung ist daher gemäß diesem Ausführungsbeispiel für diesen Fehler hinreichend tolerant gewählt, indem mit einer kleinen Apertur beleuchtet und mit einer großen Apertur detektiert wird. Die verteilte Blendenlage zeichnet die Anordnung aus.

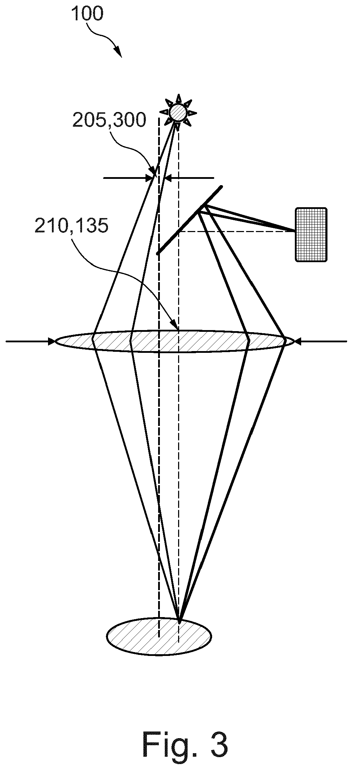

Fig. 3 zeigt eine schematische Darstellung einer Messvorrichtung 100 gemäß einem Ausführungsbeispiel. Dabei kann es sich um die in Fig. 2 beschriebene Messvorrichtung 100 handeln, mit dem Unterschied, dass die erste Apertur 205 der Blende 200 und die zweite Apertur 210 des Messvorrichtungsobjektivs 110 gemäß diesem Ausführungsbeispiel auf unterschiedlichen Symmetrieachsen liegen. Gemäß diesem Ausführungsbeispiel liegt ein Mittelpunkt der ersten Apertur 205 auf einer weiteren Achse 300, welche gemäß diesem Ausführungsbeispiel parallel zu der Achse 135 verlaufend angeordnet ist.

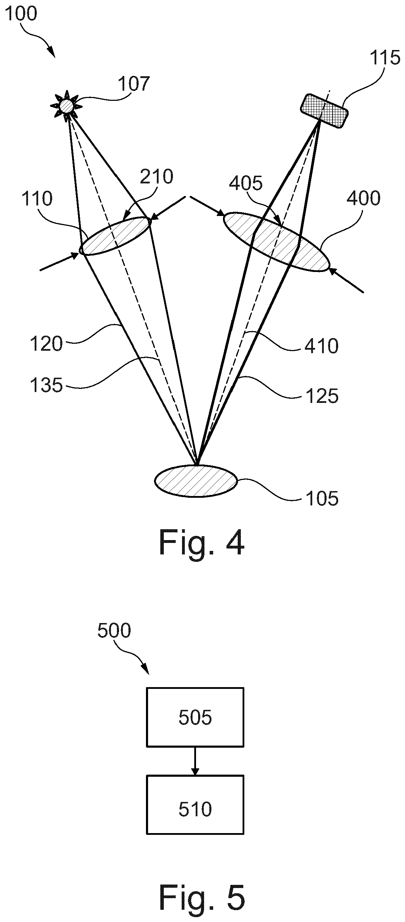

Gezeigt ist in den Figuren 3 und 4 das vorangehend beschriebene Prinzip, welches für Fälle adaptiert ist, bei denen die Symmetrieachse des Mess- oder Prüflings-Systems nicht zugänglich ist. In anderen Worten zeigen die Figuren 3 und 4 je eine "Off-Axis-Anordnung" der Messvorrichtung 100. Gemäß diesem Ausführungsbeispiel ist ein monokularer Aufbau der Messvorrichtung 100 gezeigt. Die Apertur der Beleuchtung ist auch hierbei deutlich kleiner gewählt als die der Beobachtung.

Fig. 4 zeigt eine schematische Darstellung einer Messvorrichtung 100 gemäß einem Ausführungsbeispiel. Dabei kann es sich um die in Fig. 3 beschriebene Messvorrichtung 100 handeln, mit dem Unterschied, dass die Messvorrichtung 100 gemäß diesem Ausführungsbeispiel ein weiteres Messvorrichtungsobjektiv 400 und/oder keinen Stahlteiler aufweist.

Das weitere Messvorrichtungsobjektiv 400 ist zwischen dem Bildsensor 115 und einer Aufnahmeposition zur Aufnahme des optischen Elements 105 angeordnet, wobei das weitere Messvorrichtungsobjektiv 400 ausgeformt ist, um den reflektierten Lichtstrahl 125 zu dem Bildsensor 115 zu fokussieren. Die zweite Apertur 210 der Messvorrichtungsobjektivs 110 ist gemäß diesem Ausführungsbeispiel kleiner als eine dritte Apertur 405 des weiteren Messvorrichtungsobjektivs 400. Die Achse 135 ist gemäß diesem Ausführungsbeispiel ausgehend von einem Mittelpunkt einer Oberfläche des optischen Elements 105 um 22,5° zu einer Seite geneigt angeordnet. Die Messvorrichtungsobjektive 110, 400 sind gemäß diesem Ausführungsbeispiel in einem 45°-Winkel zueinander zu dem Mittelpunkt der Oberfläche des optischen Elements 105 geneigt angeordnet. Ein Mittelpunkt des Bildsensors 115 ist gemäß diesem Ausführungsbeispiel auf einer Beobachtungsachse 410 angeordnet, die ferner einen Mittelpunkt des weiteren Messvorrichtungsobjektivs 400 und den Mittelpunkt der Oberfläche des optischen Elements 105 kreuzt. Die Beobachtungsachse 410 ist gemäß diesem Ausführungsbeispiel ausgehend von dem Mittelpunkt der Oberfläche des optischen Elements 105 um 22,5° zu einer der Seite gegenüberliegenden anderen Seite geneigt angeordnet.

Gemäß diesem Ausführungsbeispiel ist ein binokularer Aufbau der Messvorrichtung 100 gezeigt. Die Apertur der Beleuchtung ist auch hierbei deutlich kleiner gewählt als die der Beobachtung.

Fig. 5 zeigt ein Ablaufdiagramm eines Verfahrens 500 zum Messen einer Reflektivität eines beschichteten optischen Elements für ein Objektiv für eine Lichtquelle gemäß einem Ausführungsbeispiel. Dabei handelt es sich um ein Verfahren 500, das unter Verwendung einer der in einer der vorangegangenen Figuren beschriebenen Messvorrichtungen ausführbar ist.

Das Verfahren 500 weist einen Schritt 505 des Bereitstellens und einen Schritt 510 des Sensierens auf. Im Schritt 505 des Bereitstellens wird zumindest der Lichtstrahl mit der definierten Wellenlänge auf das Messvorrichtungsobjektiv bereitgestellt, das dazu ausgeformt ist, um den Lichtstrahl auf das beschichtete optische Element zu fokussieren. Im Schritt 510 des Sensierens wird zumindest die Intensität und/oder Reflexionswellenlänge des von dem optischen Element reflektierten Lichtstrahls sensiert, um die Reflektivität zu messen.

Die beschriebenen und in den Figuren gezeigten Ausführungsbeispiele sind nur beispielhaft gewählt. Unterschiedliche Ausführungsbeispiele können im Rahmen der Erfindung gemäß den beigefügten Ansprüchen vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können Verfahrensschritte des Ansatzes wiederholt ausgeführt werden, beispielsweise können im Schritt 505 des Bereitstellens unterschiedliche Lichtstrahlen mit unterschiedlichen definierten Wellenlängen auf das Messvorrichtungsobjektiv bereitgestellt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Messvorrichtung (100) zum Messen einer Reflektivität eines beschichteten optischen Elements (105) für ein Objektiv, wobei die Messvorrichtung (100) die folgenden Merkmale umfasst:
eine Lichtbereitstellungseinrichtung (107) mit zumindest einer Lichtquelle (117), die zum Bereitstellen zumindest zweier Lichtstrahlen (120) mit je einer unterschiedlichen definierten Wellenlänge ausgebildet ist,
zumindest ein Messvorrichtungsobjektiv (110), das dazu ausgeformt ist, um die Lichtstrahlen (120) auf das beschichtete optische Element (105) zu fokussieren,
zumindest einen Bildsensor (115), der angeordnet und ausgebildet ist, um zumindest eine Intensität der von dem optischen Element (105) reflektierten Lichtstrahlen (125) zu sensieren, um ansprechend auf die sensierte Intensität der von dem optischen Element (105) reflektierten Lichtstrahlen (125) die Reflektivität zu messen, und
eine Auswerteeinrichtung (140), die dazu ausgebildet ist, um ein positives Messergebnis zu ermitteln, wenn die Intensität zumindest eines reflektierten Lichtstrahls (120) einen Schwellenwert nicht übersteigt und/oder ein negatives Messergebnis zu ermitteln, wenn die Intensität zumindest eines reflektierten Lichtstrahls (120) einen Schwellenwert übersteigt, und/oder ein positives Messergebnis zu ermitteln, wenn die Intensität zumindest eines reflektierten Lichtstrahls kleiner ist, als eine weitere Intensität eines von der Lichtbereitstellungseinrichtung (107) bereitgestellten weiteren Lichtstrahls mit einer weiteren definierten Wellenlänge, welcher von dem optischen Element (105) reflektiert wurde.

2. Messvorrichtung (100) gemäß einem der vorangegangenen Ansprüche, mit einem zwischen der Lichtquelle (117) und dem Messvorrichtungsobjektiv (110) angeordneten Strahlteiler (130), der dazu ausgebildet ist, um zumindest einen der reflektierten Lichtstrahlen (135) zu dem Bildsensor (115) umzulenken, insbesondere im Wesentlichen in einem rechten Winkel umzulenken.

3. Messvorrichtung (100) gemäß einem der vorangegangenen Ansprüche, mit einer Blende (200), die zwischen der Lichtquelle (117) und dem Messvorrichtungsobjektiv (110) angeordnet ist, wobei eine erste Apertur (205) der Blende (200) kleiner ist, als eine zweite Apertur (210) des Messvorrichtungsobjektivs (110).

4. Messvorrichtung (100) gemäß einem der vorangegangenen Ansprüche, mit einer Blende (200), die zwischen der Lichtquelle (117) und dem Messvorrichtungsobjektiv (110) angeordnet ist, wobei eine erste Apertur (205) der Blende (200) und eine zweite Apertur (210) des Messvorrichtungsobjektivs (110) auf einer Symmetrieachse (135) oder auf unterschiedlichen Symmetrieachsen (135, 300) liegen.

5. Messvorrichtung (100) gemäß einem der vorangegangenen Ansprüche, mit einem weiteren Messvorrichtungsobjektiv (400), das zwischen dem Bildsensor (115) und einer Aufnahmeposition zur Aufnahme des optischen Elements (105) angeordnet ist, wobei das weitere Messvorrichtungsobjektiv (400) ausgeformt ist, um den reflektierten Lichtstrahl (135) zu dem Bildsensor (115) zu fokussieren.

6. Messvorrichtung (100) gemäß einem der vorangegangenen Ansprüche, bei der die Lichtbereitstellungseinrichtung (107) zumindest einen Filter (145) aufweist, der dazu ausgebildet ist, um die definierte Wellenlänge zumindest eines der zwei Lichtstrahlen (120) zu einer veränderten definierten Wellenlänge zu verändern, und/oder zumindest eine weitere Lichtquelle (155) aufweist, die zum Bereitstellen eines weiteren Lichtstrahls mit einer sich von der definierten Wellenlänge unterscheidenden weiteren definierten Wellenlänge ausgebildet ist, wobei das Messvorrichtungsobjektiv (110) dazu ausgeformt ist, um den weiteren Lichtstrahl auf das beschichtete optische Element (105) zu fokussieren, und der Bildsensor (115) angeordnet ist, um zumindest eine weitere Intensität und/oder weitere Reflexionswellenlänge des von dem optischen Element (105) reflektierten weiteren Lichtstrahls zu sensieren, um die Reflektivität zu messen.

7. Messvorrichtung (100) gemäß einem der vorangegangenen Ansprüche, bei der die Lichtquelle (117) zumindest eine Lichtleitfaser aufweist.

8. Messvorrichtung (100) gemäß einem der vorangegangenen Ansprüche, mit zumindest einem Wellenlängen-selektiven Element (160), das an dem Bildsensor (115) oder im Bereich des Bildsensors (115) angeordnet ist, und dazu ausgebildet ist, um einen definierten Wellenlängenbereich zu selektieren.

9. Messvorrichtung (100) gemäß Anspruch 8, mit zumindest einem weiteren Bildsensor (115), der angeordnet ist, um die Intensität und/oder Reflexionswellenlänge des von dem optischen Element (105) reflektierten Lichtstrahls (125) zu sensieren, und/oder mit zumindest einem weiteren Wellenlängen-selektiven Element, das an dem weiteren Bildsensor (115) oder im Bereich des weiteren Bildsensors (115) angeordnet ist, und dazu ausgebildet ist, um einen weiteren definierten Wellenlängenbereich zu selektieren, der sich von dem definierten Wellenlängenbereich unterscheidet.

10. Messvorrichtung (100) gemäß einem der vorangegangenen Ansprüche, bei der die Lichtquelle (117) ausgebildet ist, um den Lichtstrahl (120) mit der definierten Wellenlänge von 355nm, 532nm, 635nm, 980nm und/oder 1064nm innerhalb eines Toleranzbereichs bereitzustellen.

11. Verfahren (500) zum Messen einer Reflektivität eines beschichteten optischen Elements (105) für ein Objektiv unter Verwendung einer Messvorrichtung (100) gemäß einem der vorangegangenen Ansprüche, wobei das Verfahren (500) die folgenden Schritte aufweist:
Bereitstellen (505) zumindest der zwei Lichtstrahlen (120) mit je einer unterschiedlichen definierten Wellenlänge auf das Messvorrichtungsobjektiv (110), das dazu ausgeformt ist, um die Lichtstrahlen (120) auf das beschichtete optische Element (105) zu fokussieren;
Sensieren (510) zumindest der Intensität der von dem optischen Element (105) reflektierten Lichtstrahlen (125), um die Reflektivität zu messen; und
Ermitteln eines positiven Messergebnisses, wenn die Intensität zumindest eines reflektierten Lichtstrahls (120) einen Schwellenwert nicht übersteigt und/oder eines negativen Messergebnisses, wenn die Intensität zumindest eines reflektierten Lichtstrahls (120) einen Schwellenwert übersteigt, und/oder eines positiven Messergebnisses, wenn die Intensität zumindest eines reflektierten Lichtstrahls kleiner ist, als eine weitere Intensität eines von der Lichtbereitstellungseinrichtung (107) bereitgestellten weiteren Lichtstrahls mit einer weiteren definierten Wellenlänge, welcher von dem optischen Element (105) reflektiert wurde.

## Claims

1. A measuring device (100) for measuring a reflectivity of a coated optical element (105) for an objective, wherein the metering device (100) comprises the following features:
a light-providing device (107) having at least one light source (117), which device is designed to provide at least two light beams (120), each having a different defined wavelength,
at least one measuring device objective (110) configured to focus the light beams (120) onto the coated optical element (105),
at least one image sensor (115) arranged and designed to sense at least one intensity of the light beams (125) reflected from the optical element (105), in order to measure reflectivity in response to the sensed intensity of the light beams (125) reflected from the optical element (105), and an evaluation device (140) designed to determine a positive measurement result if the intensity of at least one reflected light beam (120) does not exceed a threshold value and/or to determine a negative measurement result if the intensity of at least one reflected light beam (120) exceeds a threshold value, and/or to determine a positive measurement result if the intensity of at least one reflected light beam is smaller than a further intensity of a further light beam with a further defined wavelength which was provided by the light-providing device (107) and which was reflected by the optical element (105).

2. The measuring device (100) according to any of the preceding claims, having a beam splitter (130) arranged between the light source (117) and the measuring device objective (110), which beam splitter is designed to deflect at least one of the reflected light beams (135) to the image sensor (115), and in particular to deflect it substantially at a right angle.

3. The measuring device (100) according to any of the preceding claims, having a diaphragm (200) arranged between the light source (117) and the measuring device objective (110), wherein a first aperture (205) of the diaphragm (200) is smaller than a second aperture (210) of the measuring device objective (110).

4. The measuring device (100) according to any of the preceding claims, comprising a diaphragm (200) arranged between the light source (117) and the measuring device objective (110), wherein a first aperture (205) of the diaphragm (200) and a second aperture (210) of the measuring device objective (110) are located on an axis of symmetry (135) or on different axes of symmetry (135, 300).

5. The measuring device (100) according to any of the preceding claims, having a further measuring device objective (400) arranged between the image sensor (115) and a receiving position for receiving the optical element (105), wherein the further measuring device objective (400) is configured to focus the reflected light beam (135) onto the image sensor (115).

6. The measuring device (100) according to any of the preceding claims, wherein the light-providing device (107) has at least one filter (145) which is designed to change the defined wavelength of at least one of the two light beams (120) to a modified defined wavelength and/or has at least one further light source (155) which is designed to provide a further light beam having a further defined wavelength differing from the defined wavelength, wherein the measuring device objective (110) is configured to focus the further light beam onto the coated optical element (105), and the image sensor (115) is arranged to sense at least one further intensity and/or further reflection wavelength of the further light beam reflected by the optical element (105) in order to measure the reflectivity.

7. The measuring device (100) according to any of the preceding claims, wherein the light source (117) has at least one optical fiber.

8. The measuring device (100) according to any of the preceding claims, having at least one wavelength-selective element (160) which is arranged on the image sensor (115) or in the region of the image sensor (115), and is designed to select a defined wavelength range.

9. The measuring device (100) according to claim 8, having at least any further image sensor (115) which is arranged to sense the intensity and/or reflection wavelength of the light beam (125) reflected by the optical element (105), and/or having at least one further wavelength-selective element which is arranged on the further image sensor (115) or in the region of the further image sensor (115) and is designed to select a further defined wavelength range which differs from the defined wavelength range.

10. The measuring device (100) according to any of the preceding claims, wherein the light source (117) is designed to provide the light beam (120) with the defined wavelength of 355 nm, 532 nm, 635 nm, 980 nm and/or 1064 nm within a tolerance range.

11. A method (500) for measuring a reflectivity of a coated optical element (105) for an objective using a measuring device (100) according to any of the preceding claims, wherein the method (500) comprises the following steps:
providing (505) at least the two light beams (120), each having a different defined wavelength, to the measuring device objective (110), which is configured to focus the light beams (120) onto the coated optical element (105);
sensing (510) at least the intensity of the light beams (125) reflected by the optical element (105), in order to measure the reflectivity; and
determining a positive measurement result if the intensity of at least one reflected light beam (120) does not exceed a threshold value and/or a negative measurement result if the intensity of at least one reflected light beam (120) exceeds a threshold value, and/or a positive measurement result if the intensity of at least one reflected light beam is less than a further intensity of a further light beam provided by the light-providing device (107) and having a further defined wavelength which was reflected by the optical element (105).

## Revendications

1. Dispositif de mesure (100) pour la mesure d'une réflectivité d'un élément optique (105) revêtu pour un objectif, le dispositif de mesure (100) comprenant les caractéristiques suivantes :
un appareil de fourniture de lumière (107) comportant au moins une source de lumière (117), laquelle est configurée pour la fourniture d'au moins deux faisceaux lumineux (120) comportant chacun une longueur d'onde définie différente,
au moins un objectif de dispositif de mesure (110), lequel est formé pour focaliser les faisceaux lumineux (120) sur l'élément optique (105) revêtu,
au moins un capteur d'image (115), lequel est disposé et configuré pour détecter au moins une intensité des faisceaux lumineux (125) réfléchis par l'élément optique (105) afin de mesurer la réflectivité en réponse à l'intensité détectée des faisceaux lumineux (125) réfléchis par l'élément optique (105), et un appareil d'évaluation (140), lequel est configuré pour déterminer un résultat de mesure positif lorsque l'intensité d'au moins un faisceau lumineux (120) réfléchi ne dépasse pas une valeur seuil et/ou pour déterminer un résultat de mesure négatif lorsque l'intensité d'au moins un faisceau lumineux (120) réfléchi dépasse une valeur seuil et/ou pour déterminer un résultat de mesure positif lorsque l'intensité d'au moins un faisceau lumineux réfléchi est inférieure à une autre intensité d'un autre faisceau lumineux fourni par l'appareil de fourniture de lumière (107) et comportant une autre longueur d'onde définie, lequel autre faisceau lumineux a été réfléchi par l'élément optique (105).

2. Dispositif de mesure (100) selon l'une des revendications précédentes, comportant un séparateur de faisceau (130) disposé entre la source de lumière (117) et l'objectif de dispositif de mesure (110), lequel séparateur de faisceau est configuré pour dévier, en particulier pour dévier sensiblement à angle droit, au moins l'un des faisceaux lumineux (135) réfléchis vers le capteur d'image (115).

3. Dispositif de mesure (100) selon l'une des revendications précédentes, comportant un diaphragme (200), lequel est disposé entre la source de lumière (117) et l'objectif de dispositif de mesure (110), une première ouverture (205) du diaphragme (200) étant plus petite qu'une seconde ouverture (210) de l'objectif de dispositif de mesure (110).

4. Dispositif de mesure (100) selon l'une des revendications précédentes, comportant un diaphragme (200), lequel est disposé entre la source de lumière (117) et l'objectif de dispositif de mesure (110), une première ouverture (205) du diaphragme (200) et une seconde ouverture (210) de l'objectif de dispositif de mesure (110) étant situées sur un axe de symétrie (135) ou sur des axes de symétrie (135, 300) différents.

5. Dispositif de mesure (100) selon l'une des revendications précédentes, comportant un autre objectif de dispositif de mesure (400), lequel est disposé entre le capteur d'image (115) et une position de réception pour la réception de l'élément optique (105), l'autre objectif de dispositif de mesure (400) étant formé pour focaliser le faisceau lumineux (135) réfléchi vers le capteur d'image (115).

6. Dispositif de mesure (100) selon l'une des revendications précédentes, dans lequel l'appareil de fourniture de lumière (107) présente au moins un filtre (145), lequel filtre est configuré pour modifier la longueur d'onde définie d'au moins l'un des deux faisceaux lumineux (120) en une longueur d'onde définie modifiée, et/ou présente au moins une autre source de lumière (155), laquelle est configurée pour la fourniture d'un autre faisceau lumineux comportant une autre longueur d'onde définie différant des longueurs d'onde définies, l'objectif de dispositif de mesure (110) étant formé pour focaliser l'autre faisceau lumineux sur l'élément optique (105) revêtu, et le capteur d'image (115) étant disposé pour détecter au moins une autre intensité et/ou une autre longueur d'onde de réflexion de l'autre faisceau lumineux réfléchi par l'élément optique (105) afin de mesurer la réflectivité.

7. Dispositif de mesure (100) selon l'une des revendications précédentes, dans lequel la source de lumière (117) présente au moins une fibre optique.

8. Dispositif de mesure (100) selon l'une des revendications précédentes, comportant au moins un élément sélectif en longueurs d'onde (160), lequel est disposé sur le capteur d'image (115) ou dans la zone du capteur d'image (115) et est configuré pour sélectionner une plage de longueurs d'onde définie.

9. Dispositif de mesure (100) selon la revendication 8, comportant au moins un autre capteur d'image (115), lequel est disposé pour détecter l'intensité et/ou la longueur d'onde de réflexion du faisceau lumineux (125) réfléchi par l'élément optique (105), et/ou comportant au moins un autre élément sélectif en longueurs d'onde, lequel est disposé sur l'autre capteur d'image (115) ou dans la zone de l'autre capteur d'image (115) et est configuré pour sélectionner une autre plage de longueurs d'onde définie, laquelle diffère de la plage de longueurs d'onde définie.

10. Dispositif de mesure (100) selon l'une des revendications précédentes, dans lequel la source de lumière (117) est configurée pour fournir le faisceau lumineux (120) comportant la longueur d'onde définie de 355 nm, 532 nm, 635 nm, 980 nm et/ou 1 064 nm à l'intérieur d'une plage de tolérance.

11. Procédé (500) pour la mesure d'une réflectivité d'un élément optique (105) revêtu pour un objectif à l'aide d'un dispositif de mesure (100) selon l'une des revendications précédentes, le procédé (500) présentant les étapes suivantes :
fourniture (505) au moins des deux faisceaux lumineux (120) comportant chacun une longueur d'onde définie différente sur l'objectif de dispositif de mesure (110), lequel objectif est formé pour focaliser les faisceaux lumineux (120) sur l'élément optique (105) revêtu ;
détection (510) au moins de l'intensité des faisceaux lumineux (125) réfléchis par l'élément optique (105) afin de mesurer la réflectivité ; et
détermination d'un résultat de mesure positif lorsque l'intensité d'au moins un faisceau lumineux (120) réfléchi ne dépasse pas une valeur seuil et/ou d'un résultat de mesure négatif lorsque l'intensité d'au moins un faisceau lumineux (120) réfléchi dépasse une valeur seuil et/ou d'un résultat de mesure positif lorsque l'intensité d'au moins un faisceau lumineux réfléchi est inférieure à une autre intensité d'un autre faisceau lumineux fourni par l'appareil de fourniture de lumière (107) et comportant une autre longueur d'onde définie, lequel autre faisceau lumineux a été réfléchi par l'élément optique (105).
